# EUROPEAN PATENT SPECIFICATION

(11) **EP 2 073 976 B1**
(45) Date of publication and mention of the grant of the patent: **12.05.2010**
(21) Application number: 07839178.6
(22) Date of filing: 02.10.2007
(51) Int. Cl.: B32B 5/26

(54) **INFUSION FABRIC ALLOWING HIGH RESIN INFUSION RATES**
INFUSIONSFASER FÜR HOHE HARZINFUSIONSRATEN
TEXTILE TRAITÉ PAR INFUSION PERMETTANT DES VITESSES D'INFUSION DE RÉSINE ÉLEVÉES

(30) Priority: 05.10.2006 US 543510
(43) Date of publication of application: 01.07.2009
(73) Proprietor: OCV Intellectual Capital, LLC, Toledo, OH 43659 (US)
(72) Inventor: HARTMAN, David, R., Granville, OH 43023 (US)
(74) Representative: Jacob, Reuben Ellis
(86) International application number: PCT/US2007/021202
(87) International publication number: WO 2008/045248

(56) References cited:
- EP-A- 0 401 991
- WO-A-2005/033393

## Description

### TECHNICAL FIELD AND INDUSTRIAL APPLICABILITY OF THE INVENTION

This invention relates generally to an infusion or reinforcement fabric that may be molded into large composite structures as well as to a method for producing such a fabric.

### BACKGROUND OF THE INVENTION

Reinforcement fabrics made from fibrous materials formed into woven, knitted and non-woven material, are well known in the art. Yarns of glass, carbon and aramid are typically formed into fabrics, and a plurality of layers of fabric are stacked and cut into dry fabric kits or preforms. The preforms are then infused or impregnated with a resin binder and cured to form a rigid composite.

Typically, the preforms include one or more layers of oriented fiber material that are assembled and shaped prior to insertion into a mold for resin injection. The mold is closed and resin is then injected into the mold to infiltrate between the fibers to complete the composite part.

In order to obtain the desired strength and structural integrity in the final part it is necessary to maintain the directional orientation of the fibers during the resin impregnation and molding process. This can be accomplished in one of two ways. In the first, the unidirectional fibers are stitched together or held together by transverse fibers. Unfortunately, stitching generally reduces the toughness of the composite. Further, the stitching and/or transverse fibers generally slow the impregnation process and make the unidirectional fibers more difficult to wet out.

Alternatively, the unidirectional fibers may be held in place by preimpregnation with resin. While generally sufficient to hold the fibers together during resin infusion and molding, the resin used for preimpregnation has an unfortunate tendency to interfere or slow resin impregnation during the molding process thereby making it difficult to properly wet out the unidirectional fibers.

The present invention relates to an improved infusion fabric that better optimizes kitting, preforming, conformability to tooling, resin infusion rate, consolidation thickness, surface aesthetics and composite structural performance in a range of closed molding processes including VIP, RTM and RTM Lite or VARTM processes. This represents the full range of composite closed molding processes used by marine, wind, construction, transportation and industrial customers. More specifically, the reinforcement fabric of the present invention provides sufficient stiffness to hold vertical mold surfaces and maintain fiber alignment for optimal composite mechanical properties like compressive strength and strain to failure. Simultaneously, the fabric allows very rapid resin infusion rates to insure complete wet out of the fibers and optimal molding of components with the highest quality.

### SUMMARY OF THE INVENTION

In its simplest form, the reinforcement fabric comprises (a) a first layer of collimated continuous fibers, (b) a second layer selected from a group consisting of veil, continuous filament mat, chopped strand mat, direct chopped mat, direct continuous mat, collimated continuous fibers, woven fabric, non-woven fabric, scrim and combinations thereof and (c) a surface adhesive. The surface adhesive adheres the first and second layers together. The surface adhesive is selected from a group consisting of a hot melt adhesive and a web bonded adhesive. The surface adhesive has a melt flow index range of about 5 to about 500 at melt temperature and about 900 to about 2500 at application temperature. In one possible embodiment the reinforcement fabric is stitchless, relying completely upon the surface adhesive to hold the collimated continuous fibers in alignment.

The collimated continuous fibers are selected from a group of materials consisting of glass fibers, carbon fibers, graphite fibers, vitreous carbon fibers, non-graphite carbon fibers, boron monolithic graphite fibers, boron monolithic non-graphite carbon fibers, silicone, aramid, ceramic fibers, thermoset polymer fibers, thermoplastic polymer fibers, natural fibers and mixtures thereof. The second layer is constructed from a material selected from a group of materials consisting of glass fibers, carbon fibers, graphite fibers, vitreous carbon fibers, non-graphite carbon fibers, boron monolithic graphite fibers, boron monolithic non-graphite carbon fibers, silicone, aramid, ceramic fibers, thermoset polymer fibers, thermoplastic polymer fibers, natural fibers and mixtures thereof.

More specifically describing the invention the collimated continuous fibers have a strand size of between about 100 to about 10,000 tex and a filament diameter of between about 9 to about 30 microns. In a typical application, the collimated continuous fibers have a strand size of between about 600 to about 8,000 tex and a filament diameter of between about 12 to about 26 microns.

The chopped fibers have a strand size of between about 1,000 to about 8,000 tex and a filament diameter of between about 6 to about 30 microns. The chopped fibers have a tex of between about 10 to about 1,000 in split strands. The filaments in the veil are stranded, fully dispersed or a combination of stranded and fully dispersed. In addition the reinforcement fabric includes a size having reagents selected from a group consisting of water, acetic acid, a lubricant, a film former, a silane coupling agent, a biocide and mixtures thereof.

The surface adhesive is formulated or selected from a group consisting of PE, microcrystalline wax, EVA, modified EVA, ethylene - acrylic ester copolymer, ethylene - acrylic ester - maleic anhydride terpolymers, copolyesters, copolyamides, amorphous polypropylene, synthetic rubbers, acrylic block copolymers, and combinations thereof. Where the surface adhesive is a web bonded adhesive, it is characterized by a tack of between about 0.5 and about 1 N/m.

The reinforcement fabric has a weight per unit area of between about 0.5 and about 3 kg/sm and comprises between about 30 and about 80 weight percent first layer, between about 20 and about 70 weight percent second layer and between about 0.1 and about 2 weight percent surface adhesive. The surface adhesive is applied at an areal weight of between about 2 and about 30 gsm.

In accordance with an additional aspect of the present invention a method is provided for producing a reinforcement fabric. That method comprises: (a) forming a collimated sheet of continuous fibers; (b) providing a surface adhesive selected from a group consisting of a hot melt adhesive and a web bonded adhesive having a melt flow index range of about 5 to about 500 at melt temperature and about 900 to about 2500 at application temperature; and (c) consolidating the collimated sheet with a layer of material selected from a group consisting of veil, continuous filament mat, chopped strand mat, direct chopped mat, direct continuous mat, collimated continuous fibers, woven fabric, non-woven fabric, scrim and combinations thereof.

The forming step includes the additional steps of feeding a plurality of continuous fibers from a creel and providing the surface adhesive as a web. The forming step may also include the making of the surface adhesive into a web in line. Further the forming step may include the extruding of the surface adhesive as a hot melt. Where the surface adhesive is a hot melt the method includes the applying of the hot melt adhesive in a pattern selected from a group consisting of a sinusoidal pattern, a loop pattern, a straight line pattern and combinations thereof. The surface adhesive is applied at an areal density of between about 2 and about 30 gsm. Further the method includes completing the consolidating at a rate of between about 50 and about 500 meters/minute.

In accordance with an additional aspect of the present invention the reinforcement fabric comprises a surfacing veil, a continuous filament mat, at least one sheet of collimated continuous fibers, a layer of woven or non-woven fabric and a surface adhesive. The surface adhesive is selected from a group consisting of a hot melt adhesive and a web bonded adhesive having a melt flow index range of about 5 to about 500 at melt temperature and about 900 to about 2500 at application temperature.

In accordance with still another aspect of the present invention the reinforcement fabric comprises a surfacing veil, an infusion media layer selected from a group of materials consisting of veil, continuous filament mat, chopped strand mat, direct chopped mat, direct continuous mat, collimated continuous fibers, woven fabric, non-woven fabric, scrim and combinations thereof, a sheet of collimated continuous fibers, a first reinforcing layer of unidirectional fabric extending in a direction about +45 degrees relative to the collimated continuous fibers, a second reinforcing layer of unidirectional fabric extending in a direction about -45 degrees relative to the collimated continuous fibers and a surface adhesive. The surface adhesive is selected from a group consisting of a hot melt adhesive and a web bonded adhesive having a melt flow index range of about 5 to about 500 at melt temperature and about 900 to about 2500 at application temperature. The reinforcement fabric may also include a second sheet of collimated continuous fibers and a surfacing adhesive underlying the second reinforcing layer.

In accordance with yet another aspect of the present invention a reinforcement fabric comprises a surfacing veil, a continuous filament mat, at least one sheet of collimated continuous fibers, a first reinforcing layer of unidirectional fabric extending in a direction of about + 45 degrees relative to the collimated continuous fibers, a second reinforcing layer of unidirectional fabric extending in a direction of about -45 degrees relative to the collimated continuous fibers and a surface adhesive selected from a group consisting of a hot melt adhesive and a web bonded adhesive having a melt flow index range of about 5 to about 500 at melt temperature and about 900 to about 2500 at application temperature. The reinforcement fabric further comprises a layer of chopped fibers. In addition the reinforcement fabric may further include at least one additional reinforcing layer underlying the second reinforcing layer.

In the following description there is shown and described several different embodiments of this invention, simply by way of illustration of some of the modes best suited to carry out the invention. As it will be realized, the invention is capable of other different embodiments and its several details are capable of modification in various, obvious aspects all without departing from the invention. Accordingly, the drawings and descriptions will be regarded as illustrative in nature and not as restrictive.

### GRIEF DESCRIPTION OF THE DRAWINGS

The accompanying drawings incorporated in and forming a part of the specification, illustrate several aspects of the present invention, and together with the description serve to explain certain principles of the invention. In the drawings:
Fig. 1 is a schematical side elevational view of one possible embodiment of the reinforcement fabric of the present invention;
Fig. 2a is a schematical side elevational view illustrating an inline process for making the reinforcement fabric of the present invention;
Fig. 2b is a schematical view illustrating an extruded hot melt process for making the reinforcement fabric of the present invention;
Fig. 2c is a schematical illustration of a dry adhesive web process for making the reinforcement fabric of the present invention;
Fig. 3 is a schematical side elevational view of an alternative embodiment of the reinforcement fabric of the present invention;
Fig. 4 is a schematical side elevational view of yet another alternative embodiment of the reinforcement fabric of the present invention;
Fig. 5 is a partially sectional perspective view of yet another possible embodiment of the reinforcement fabric of the present invention; and
Fig. 6 is a partially sectional perspective view of yet another possible embodiment of the reinforcement fabric of the present invention.

Reference will now be made in detail to the present preferred embodiments of the invention, examples of which are illustrated in the accompanying drawings.

### DETAILED DESCRIPTION AND PREFERRED EMBODIMENTS OF THE INVENTION

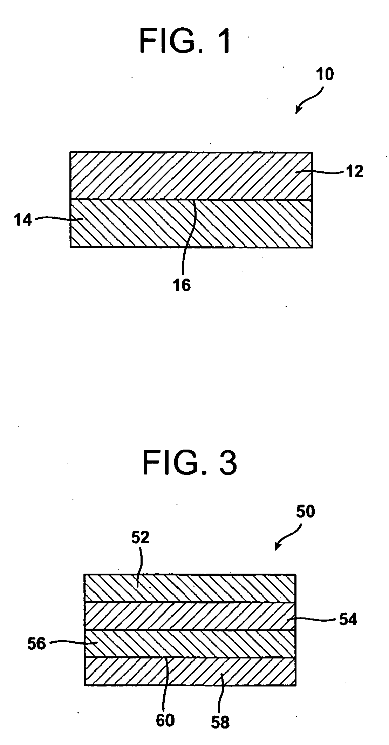

A first embodiment of the reinforcement fabric 10 of the present invention is illustrated in Fig. 1. The reinforcement fabric 10 includes a first layer 12 of collimated continuous fibers and a second layer 14 selected from a group consisting of veil, continuous filament mat, chopped strand mat, direct chopped mat, direct continuous mat, collimated continuous fibers, woven fabric, non-woven fabric, scrim and combinations thereof. The layers 12 and 14 are bonded together by a surface adhesive 16 at the interface thereof that functions to hold the collimated continuous fibers in position. Thus, the illustrated reinforcement fabric is stitchless.

The first layer 12 of collimated continuous fibers may be selected from a group of materials consisting of glass fibers, carbon fibers, graphite fibers, vitreous carbon fibers, non-graphite carbon fibers, boron monolithic graphite fibers, boron monolithic non-graphite carbon fibers, silicone, aramid, ceramic fibers, thermoset polymer fibers, thermoplastic polymer fibers, natural fibers and mixtures thereof. The collimated continuous fibers have a strand size of between about 100 to about 10,000 tex and a filament diameter of between about 9 to about 30 microns. For typical applications, the collimated continuous fibers usually have a strand size of between about 600 to about 8,000 tex and a filament diameter of between about 12 to about 26 microns.

The second layer 14 is constructed from a material selected from a group of materials consisting of glass fibers, carbon fibers, graphite fibers, vitreous carbon fibers, non-graphite carbon fibers, boron monolithic graphite fibers, boron monolithic non-graphite carbon fibers, silicone, aramid, ceramic fibers, thermoset polymer fibers, thermoplastic polymer fibers, natural fibers and mixtures thereof. Where chopped fibers are utilized, those fibers have a strand size of between about 1,000 to about 8,000 tex and a filament diameter of between about 6 to 30 microns. The chopped fibers have a tex of between about 10 to about 1,000 tex in split strands. Where veil is utilized, the filaments are stranded, fully dispersed or a combination of stranded and fully dispersed.

The fibers utilized in the first layer 12 and second layer 14 may include a size. That size includes reagents selected from a group consisting of water, acetic acid, a lubricant, a film former, a silane coupling agent, a biocide and mixtures thereof.

The surface adhesive 16 is selected or formulated from a group consisting of PE, microcrystalline wax, EVA, modified EVA, ethylene - acrylic ester copolymer, ethylene - acrylic ester - maleic anhydride terpolymers, copolyesters, copolyamides, amorphous polypropylene, synthetic rubbers, acrylic block copolymers, and combinations thereof. Where a web bonded adhesive is utilized, the adhesive has a tack between about 0.5 and about 1 N/m. Where a hot melt adhesive is utilized, the adhesive has an open time of between about 3 seconds and about 10 minutes at application temperatures of about 100C to 200C and a shear viscosity of between about 10 Pa*s and about 250 Pa*s.

Advantageously, the surface adhesive 16 securely bonds and holds the individual continuous fibers of the collimated fiber layer 12 in parallel alignment while simultaneously allowing rapid infusion when that layer is subsequently infused with resin. This is because the surface adhesive 16 only penetrates the fibers to a limited extent and leaves an infusion pathway. The surface energy of the adhesive is typically less than 45 dynes/cm. The adhesive cohesive strength of 0.3 MPa to 6 MPa depends on whether pressure sensitive characteristics are desired in the application for flexibility during preparation in mold placement with draping, cutting, splicing and adhering plies of the bonded assembly. Likewise the peel strength of the bonded assembly can range from 40 to 200 N/m for pressure sensitive attributes or from 300 to 3000 N/m for permanent bonded assemblies.

The reinforcement fabric 10 illustrated in Fig. 1 typically has a weight per unit area of between about 0.5 and about 3.0 kg/sm and comprises between about 30 and about 80 weight percent first layer 12, between about 20 and about 70 weight percent second layer 14 and between about 0.1 and about 2 weight percent surface adhesive 16. Typically the reinforcement fabric 10 has a weight of between about 0.5 and about 1.5 kg/sm with the first layer 12 having a weight of between about 0.3 and about 1.5 kg/sm, the second layer 14 having a weight of between about 0.05 and about 0.75 kg/sm and the surface adhesive 16 being applied at a density of between about 2 and about 30 gsm. In addition, the first layer 12 has a porosity of between about 1,000 and about 9,000 l/sm/s.

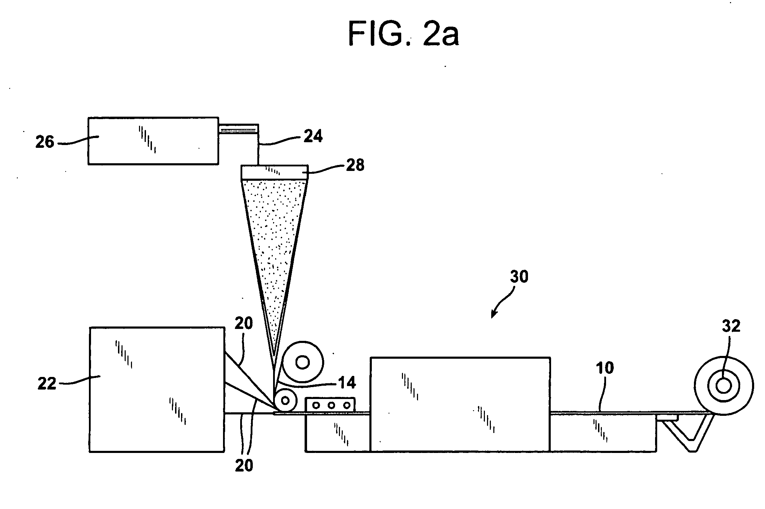

The reinforcement fabric 10 of the present invention may be processed or manufactured in accordance with a number of methods. A process for the inline adhesive web extrusion of the reinforcement fabric 10 is illustrated in Fig. 2a. Individual continuous filament fibers 20 are fed from a creel 22 into alignment. Adhesive 24 is fed from a source 26 and air is injected into a spinner 28. An adhesive web 30 is extruded from the spinner 28 and applied to the face of the second layer 14 of continuous filament mat, fabric or the like. This is followed by the consolidating of the first layer or collimated sheet of continuous fibers 12, the second layer 14 and the surface adhesive 16 in the adhesive web bonding unit 30. The resulting reinforcement fabric 10 is then collected on a take up reel 32. The consolidating may be performed at a rate of between about 50 and about 500 meters/minutes.

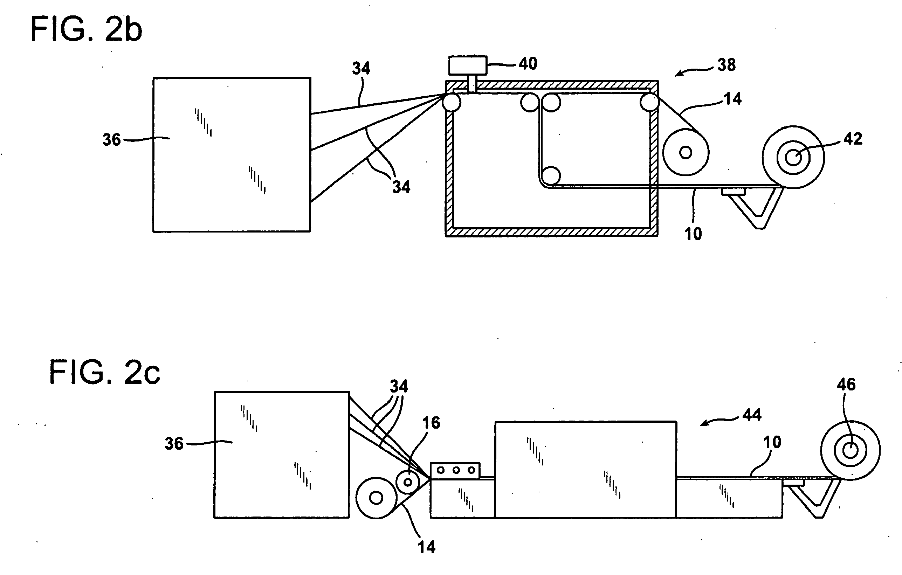

An alternative process for manufacturing the reinforcement fabric 10 of the present invention is illustrated in Fig. 2b. As illustrated, a plurality of continuous fibers 34 are fed in alignment from the creel 36 into the extruded hot melt handling unit 38. Simultaneously, a hot melt adhesive is extruded from the die 40. The first layer of collimated continuous fibers 12 is then consolidated with a second layer 14 of, for example, continuous filament mat, fabric, veil, chopped strand mat, directed chopped mat, direct continuous mat, collimated continuous fibers, woven fabric, non-woven fabric, scrim and combinations thereof to produce the reinforcement fabric 10 that is then taken up on the reel 42.

The hot melt adhesive may be applied in substantially any pattern including patterns selected from a group consisting of a sinusoidal pattern, a loop pattern, a straight line pattern and combinations thereof. In either embodiment the surface adhesive is provided at an areal density of between about 2 and about 30 gsm.

Fig. 2c illustrates yet another alternative process for manufacturing the reinforcement fabric 10 of the present invention. As illustrated, a plurality of continuous fibers 34 are fed in alignment from the creel 36 along with a layer 14 of continuous filament mat, fabric or the like and an intervening web of surface adhesive 16 into a dry adhesive web handling unit 44. The reinforcement fabric 10 is consolidated in the handling unit 44 and then taken up on the reel 46.

Up to this point a basic two layer reinforcement fabric 10 has been described. It should be appreciated, however, that the present invention encompasses other embodiments with more than two layers. Examples of these alternative embodiments are presented in Figs. 3-6.

A reinforcement fabric 50 suitable, for example, for truck trailer sidewall applications is illustrated in Fig. 3. That reinforcement fabric 50 includes a surfacing veil 52, a continuous filament mat 54, at least one sheet of collimated continuous fibers 56 and a layer 58 of woven or non-woven fabric. A surface adhesive 60 is provided at the interface between the sheet of collimated continuous fibers 56 and the layer 58. That surface adhesive 60 is selected from a group consisting of a hot melt adhesive and a web bonded adhesive. The surface adhesive has a melt flow index range of about 5 to about 500 at room temperature and about 900 to about 2500 at application temperature.

The surfacing veil 52 of the reinforcement fabric 50 may, for example, be constructed from glass, carbon, polyester, polyamide, polyolefin, or hybrid fibers thereof with a binder. The continuous filament mat 54 of the reinforcement fabric 50 may, for example, be constructed from glass, carbon, polyester, polyamide, polyolefin, or hybrid strands thereof with a binder. The sheet of collimated continuous fibers 56 substantially corresponds to the first layer 12 described in detail with respect to the embodiment shown in Fig. 1. The layer 58 may be constructed from a material selected from a group of materials consisting of glass fibers, carbon fibers, graphite fibers, vitreous carbon fibers, non-graphite carbon fibers, boron monolithic graphite fibers, boron monolithic non-graphite carbon fibers, silicone, aramid, ceramic fibers, thermoset polymer fibers, thermoplastic polymer fibers, natural fibers and mixtures thereof. The reinforcement fabric 50 may be processed inline in a manner similar to that illustrated in Fig.s 2a-2c.

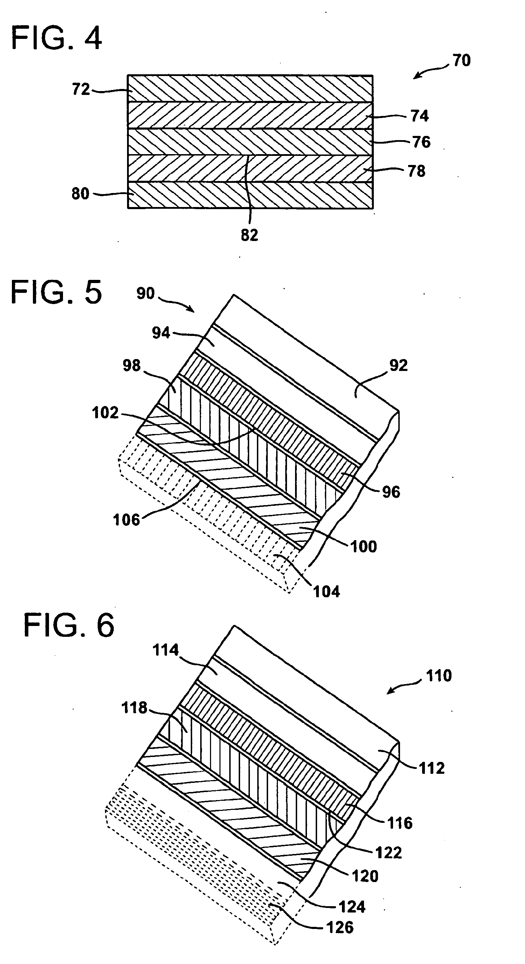

The reinforcement fabric 70 illustrated in Fig. 4 may, for example, be utilized for marine industry deck house applications. As illustrated the reinforcement fabric comprises a surfacing veil 72, a layer of chopped fibers 74, a sheet of collimated continuous fibers 76, an infusion media layer 78 and a layer of woven fabric, non-woven fabric or chopped fibers 80. A surface adhesive 82 is provided at the interface between the sheet of collimated continuous fibers 76 and the infusion media layer 78. That surface adhesive 82 is selected from a group consisting of a hot melt adhesive and a web bonded adhesive having a melt flow index range of about 5 to about 500 at room temperature and about 900 to about 2500 at application temperature.

The surfacing veil 72 is constructed from glass, carbon, polyester, polyamide, polyolefin, or hybrid strands thereof with a binder. The chopped fibers may be constructed from glass or carbon fibers. The chopped fibers have a strand size of between about 1000 to about 8000 tex and a filament diameter of between about 6 to about 30 microns. The chopped fibers also have a tex of between about 10 to about 1000 in split strands. The sheet 76 of collimated continuous fibers substantially corresponds to the first layer 12 in the Fig. 1 embodiment.

The infusion media layer 78 is selected from a group of materials consisting of veil, continuous filament mat, chopped strand mat, direct chopped mat, direct continuous mat, collimated continuous fibers, woven fabric, non-woven fabric, scrim and combinations thereof. Materials utilized for the infusion media layer 78 include, for example, continuous filament mat, scrim or direct continuous mat. The layer of woven fabric, non-woven fabric or chopped fibers 80 is described in greater detail above with respect to the second layer 14 of the Fig. 1 embodiment. The surface adhesive 82 corresponds to the surface adhesive 16 described in greater detail above with respect to the Fig. 1 embodiment.

The reinforcement fabric 90 illustrated in Fig. 5 may be used, for example, for marine industry boat hull applications. The reinforcement fabric 90 includes a surfacing veil 92, an infusion media layer 94, a sheet of collimated continuous fibers 96, a first reinforcing layer of unidirectional fabric 98 extending in a direction about +45 degrees relative to the collimated continuous fibers 96 and a second reinforcing layer of unidirectional fabric 100 extending in a direction about -45 degrees relative to the collimated continuous fibers 96. In addition a surface adhesive 102 is provided at the interface between the collimated continuous fibers 96 and the first reinforcing layer 98.

The surfacing veil 92 may be constructed from, for example, glass, carbon, polyester, polyamide, polyolefin, or hybrid fibers thereof with a binder. The infusion media layer is selected from a group of materials consisting of veil, continuous filament mat, chopped strand mat, direct chopped mat, direct continuous mat, collimated continuous fibers, woven fabric, non-woven fabric, scrim and combinations thereof. Materials used include, for example, continuous filament mat. The sheet 96 of collimated continuous fibers corresponds to the first layer 12 described in detail above with respect to the Fig. 1 embodiment.

The first and second reinforcing layers of unidirectional fabric 98, 100 may be made from glass or carbon fibers.

As further illustrated in Fig. 5, the reinforcement fabric 90 may also include an optional second sheet of collimated continuous fibers 104 underlying the second reinforcing layer of unidirectional fabric 100. A surfacing adhesive 106, like the adhesive 102, is provided at the interface between the second reinforcing layer 100 and second sheet of collimated continuous fibers 104.

Fig. 6 illustrates a reinforcement fabric 110 that may, for example, be utilized for wind blade applications. The reinforcement fabric 110 comprises a surfacing veil 112, a continuous filament mat 114, at least one sheet of collimated continuous fibers 116, a first reinforcing layer of unidirectional fabric 118 extending in a direction of about + 45 degrees relative to the collimated continuous fibers 116, and a second reinforcing layer of unidirectional fabric 120 extending in a direction of about -45 degrees relative to the collimated continuous fibers 116. A surface adhesive 122 is provided at the interface between the sheet of collimated continuous fibers 116 and the first reinforcing layer 118. The surface adhesive 122 is selected from a group consisting of a hot melt adhesive and a web bonded adhesive just like the other surface adhesives described in the previous embodiments. The surfacing veil 112 is similar to that described above with regard to the surfacing veil 92 in the Fig. 5 embodiment. The collimated continuous fibers 114 is similar to that described above with respect to the continuous filament mat 54 in the Fig. 3 embodiment. The sheet of collimated continuous fibers 116 substantially corresponds to the description of the first layer 12 in the Fig. 1 embodiment. The first and second reinforcing layers of unidirectional fabric 118, 120 substantially correspond in detail to the reinforcing layers 98 and 100 discussed with respect to the Fig. 5 embodiment.

In accordance with additional aspects of the Fig. 6 embodiment the reinforcement fabric 110 may also include an optional layer of chopped fibers 124 that may be positioned, for example, underlying the second reinforcing layer 120. The chopped fibers of the layer 124 may, for example, have the characteristics of the chopped fiber layer 74 of the Fig. 4 embodiment. Still further, the reinforcement fabric 110 may also include at least one additional reinforcing layer 126 underlying the second reinforcing layer 120 with or without an intervening chopped fiber layer 124. The additional reinforcing layer 126 may include unidirectional fabric extending in a direction corresponding to or different from the first and second reinforcing layers 118, 120.

In summary, numerous benefits result from employing the concepts of the present invention. The reinforcement fabric 10, 50, 70, 90, 110 of the present invention incorporates continuous fibers bonded together in a collimated sheet 12, 56, 76, 96, 104, 116 using a hot melt or web bonded adhesive 24, 60, 82, 102, 106, 122. When optimized the architecture and chemistry of the reinforcement fabric of the present invention allows 2 - 3 X resin infusion rates for complex structures with consolidation under vacuum VIP or pressure assist vacuum RTM-Lite. Further, the reinforcement fabric has enough stiffness to hold vertical mold surfaces and maintain fiber alignment for optimal composite mechanical properties like compressive strength and strain to failure.

The reinforcement fabrics of the present invention provide improved kitting/preforming, conformability to tooling, surface aesthetics and composite structural performance for a wide range of molding processes at optimal levels heretofore unachievable with state of the art reinforcement fabrics utilizing stitching to hold fibers in alignment. Advantageously, the reinforcement fabric of the present invention may be processed inline at rates of between 50 - 500 m/min. This advantageously eliminates the bottleneck typically associated with stitch bonding processes which reduce processing speeds to as low as 5 to 20 m/min.

Advantageously, the reinforcement fabrics of the present invention combine multi-compatible sizing capability for use in polyester, vinyl ester, epoxy, phenolic and some urethane resin systems. The reinforcement fabric is architecture engineered to structural application load requirements such as bending and compressive strength. The optimized fiber alignment of the collimated fibers maintained by the surface adhesive supplements load requirements and reduces/eliminates stitching defect to improve durability in wet environments and for higher allowable fatigue strength.

The foregoing description of the preferred embodiments of the invention have been presented for purposes of illustration and description. It is not intended to be exhaustive or to limit the invention to the precise form disclosed. Obvious modifications or variations are possible in light of the above teachings. For example, the collimated continuous fiber layer 12 could include stitching if desired for any reason.

The embodiments were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally and equitably entitled. The drawings and preferred embodiments do not and are not intended to limit the ordinary meaning of the claims and their fair and broad interpretation in any way.

## Claims

1. A reinforcement fabric, comprising:
a first layer of collimated continuous fibers;
a second layer selected from a group consisting of veil, continuous filament mat, chopped strand mat, direct chopped mat, direct continuous mat, collimated continuous fibers, woven fabric, non-woven fabric, scrim and combinations thereof; and
a surface adhesive, said surface adhesive adhering said first and second layers together, said surface adhesive being selected from a group consisting of a hot melt adhesive and a web bonded adhesive, said surfacing adhesive having a melt flow index range of 5 to 500 at melt temperature and 900 to 2500 at application temperature.

2. The reinforcement fabric of claim 1 wherein said reinforcement fabric is stitchless.

3. The reinforcement fabric of claim 1, wherein said collimated continuous fibers are selected from a group of materials consisting of glass fibers, carbon fibers, graphite fibers, vitreous carbon fibers, non-graphite carbon fibers, boron monolithic graphite fibers, boron monolithic non-graphite carbon fibers, silicone, aramid, ceramic fibers, thermoset polymer fibers, thermoplastic polymer fibers, natural fibers and mixtures thereof.

4. The reinforcement fabric of claim 1, wherein said second layer is constructed from a material selected from a group of materials consisting of glass fibers, carbon fibers, graphite fibers, vitreous carbon fibers, non-graphite carbon fibers, boron monolithic graphite fibers, boron monolithic non-graphite carbon fibers, silicone, aramid, ceramic fibers, thermoset polymer fibers, thermoplastic polymer fibers, natural fibers and mixtures thereof.

5. The reinforcement fabric of claim 1, wherein said collimated continuous fibers have a strand size of between 100 and 10,000 tex and a filament diameter of between 9 and 30 microns, preferably a strand size of between 600 and 8,000 tex and a filament diameter of between 12 and 26 microns.

6. The reinforcement fabric of claim 1, wherein said chopped fibers have a strand size of between 1,000 and 8,000 tex and a filament diameter of between 6 and 30 microns.

7. The reinforcement fabric of claim 6, wherein said chopped fibers have a tex of between 10 and 1,000 in split strands.

8. The reinforcement fabric of claim 1, wherein filaments in said veil are stranded, fully dispersed or a combination of stranded and fully dispersed.

9. The reinforcement fabric of claim 1, further including a size including reagents selected from a group consisting of water, acetic acid, a lubricant, a film former, a silane coupling agent, a biocide and mixtures thereof.

10. The reinforcement fabric of claim 1, wherein said surface adhesive is selected from a group consisting of PE, microcrystalline wax, EVA, modified EVA, ethylene - acrylic ester copolymer, ethylene - acrylic ester - maleic anhydride terpolymers, copolyesters, copolyamides, amorphous polypropylene, synthetic rubbers, acrylic block copolymers, and combinations thereof.

11. The reinforcement fabric of claim 1, wherein said surface adhesive has a tack between 0.5 and 1 N/m.

12. The reinforcement fabric of claim 1, wherein said reinforcement fabric has a weight per unit area of between 0.5 and 3 kg/sm and comprises between 30 and 80 weight percent first layer, between 20 and 70 weight percent second layer and between 0.1 and 2 weight percent surface adhesive.

13. The reinforcement fabric of claim 1, wherein said surface adhesive is at a density of between 2 and 30 gsm.

14. The reinforcement fabric of claim 1, wherein said first layer has a weight of between 0.3 and 1.5 kg/sm .

15. The reinforcement fabric of claim 1, wherein said first layer has a porosity of between 1000 and 9000 l/sm/s.

16. A method for producing a reinforcement fabric, comprising:
forming a collimated sheet from continuous fibers;
providing a surface adhesive selected from a group consisting of a hot melt adhesive and a web bonded adhesive having a melt flow index range of 5 to 500 at room temperature and 900 to 2500 at application temperature; and
consolidating said collimated sheet with a layer of material selected from a group consisting of veil, continuous filament mat, chopped strand mat, direct chopped mat, direct continuous mat, collimated continuous fibers, woven fabric, non-woven fabric, scrim and combinations thereof.

17. The method of claim 16 wherein said forming step includes feeding a plurality of continuous fibers from a creel, said surface adhesive as a web, making said surface adhesive into a web in line, extruding said surface adhesive as a hot melt, preferably by applying said hot melt adhesive in a pattern selected from a group consisting of a sinusoidal pattern, a loop pattern, a straight line pattern and combinations thereof, applying said surface adhesive at an areal density of between 2 and 30 gsm, completing said consolidating at a rate of between 50 and 500 meters/minute, and/or including utilizing surface adhesive having a tack of between 0.5 and 1.0 N/m.

18. A reinforcement fabric, comprising:
a surfacing veil;
a continuous filament mat;
at least one sheet of collimated continuous fibers;
a layer of woven or non-woven fabric; and
a surface adhesive, said surface adhesive being selected from a group consisting of a hot melt adhesive and a web bonded adhesive having a melt flow index range of 5 to 500 at room temperature and 900 to 2500 at application temperature.

19. A reinforcement fabric, comprising:
a surfacing veil;
a layer of chopped fibers;
a sheet of collimated continuous fibers;
an infusion media layer selected from a group of materials consisting of veil, continuous filament mat, chopped strand mat, direct chopped mat, direct continuous mat, collimated continuous fibers, woven fabric, non-woven fabric, scrim and combinations thereof;
a layer of woven fabric, non-woven fabric or chopped fibers; and
a surface adhesive, said surface adhesive being selected from a group consisting of a hot melt adhesive and a web bonded adhesive having a melt flow index range of 5 to 500 at room temperature and 900 to 1300 at application temperature.

20. A reinforcement fabric, comprising:
a surfacing veil;
an infusion media layer selected from a group of materials consisting of veil, continuous filament mat, chopped strand mat, direct chopped mat, direct continuous mat, collimated continuous fibers, woven fabric, non-woven fabric, scrim and combinations thereof;
a sheet of collimated continuous fibers;
a first reinforcing layer of unidirectional fabric extending in a direction +45 degrees relative to said collimated continuous fibers;
a second reinforcing layer of unidirectional fabric extending in a direction -45 degrees relative to said collimated continuous fibers; and
a surface adhesive, said surface adhesive being selected from a group consisting of a hot melt adhesive and a web bonded adhesive having a melt flow index range of 5 to 500 at room temperature and 900 to 2500 at application temperature.

21. The reinforcement fabric of claim 20, further including a second sheet of collimated continuous fibers and a surfacing adhesive underlying said second reinforcing layer.

22. A reinforcement fabric, comprising:
a surfacing veil;
a continuous filament mat;
at least one sheet of collimated continuous fibers;
a first reinforcing layer of unidirectional fabric extending in a direction of + 45 degrees relative to said collimated continuous fibers;
a second reinforcing layer of unidirectional fabric extending in a direction of -45 degrees relative to said collimated continuous fibers; and
a surface adhesive, said surface adhesive being selected from a group consisting of a hot melt adhesive and a web bonded adhesive having a melt flow index range of 5 to 500 at room temperature and 900 to 2500 at application temperature.

23. The reinforcement fabric of claim 22, further comprising a layer of chopped fibers.

24. The reinforcement fabric of claim 22, further including at least one additional reinforcing layer underlying said second reinforcing layer.

## Patentansprüche

1. Armierungsgewebe, umfassend:
eine erste Lage gebündelter Endlosfasern;
eine zweite Lage, die ausgewählt ist aus einer Gruppe bestehend aus Oberflächenmatte, Endlosmatte, Glasfasermatte, direkter Schnittmatte, direkter Endlosmatte, gebündelten Endlosfasern, Gewebe, Vlies, Gelege und Kombinationen davon; und
einen Oberflächenklebstoff, wobei der Oberflächenklebstoff die erste und zweite Lage zusammenklebt, wobei der Oberflächenklebstoff ausgewählt ist aus einer Gruppe bestehend aus einem Heißschmelzklebstoff und einem bahngebundenen Klebstoff, wobei der Oberflächenklebstoff einen Schmelzflussindexbereich von 5 bis 500 bei Schmelztemperatur und von 900 bis 2500 bei Auftragstemperatur aufweist.

2. Armierungsgewebe nach Anspruch 1, wobei das Armierungsgewebe nahtlos ist.

3. Armierungsgewebe nach Anspruch 1, wobei die gebündelten Endlosfasern ausgewählt sind aus einer Gruppe bestehend aus Glasfasern, Kohlenstofffasern, Grafitfasern, Glas-Kohlenstofffasern, Nicht-Grafit-Kohlenstofffasern, Bor-monolithischen Grafitfasern, Bor-monolithischen Nicht-Grafit-Kohlenstofffasern, Silikon-, Aramid-, keramischen Fasern, wärmgehärteten Polymerfasern, thermoplastischen Polymerfasern, natürlichen Fasern und Gemischen davon.

4. Armierungsgewebe nach Anspruch 1, wobei die zweite Lage aus einem Material konstruiert ist, das ausgewählt ist aus einer Gruppe bestehend aus Glasfasern, Kohlenstofffasern, Grafitfasern, Glas-Kohlenstofffasern, Nicht-Grafit-Kohlenstofffasern, Bor-monolithischen Grafitfasern, Bor-monolithischen Nicht-Grafit-Kohlenstofffasern, Silikon-, Aramid-, keramischen Fasern, wärmgehärteten Polymerfasern, thermoplastischen Polymerfasern, natürlichen Fasern und Gemischen davon.

5. Armierungsgewebe nach Anspruch 1, wobei die gebündelten Endlosfasern eine Stranggröße von 100 bis 10.000 tex und einen Filamentdurchmesser von 9 bis 30 Mikron aufweisen, vorzugsweise eine Stranggröße von 600 bis 8.000 tex und einen Filamentdurchmesser von 12 bis 26 Mikron.

6. Armierungsgewebe nach Anspruch 1, wobei die Schnittfasern eine Stranggröße von 1.000 bis 8.000 tex und einen Filamentdurchmesser von 6 bis 30 Mikron aufweisen.

7. Armierungsgewebe nach Anspruch 6, wobei die Schnittfasern einen tex von 10 bis 1.000 in geteilten Strängen aufweisen.

8. Armierungsgewebe nach Anspruch 1, wobei die Filamente in der Oberflächenmatte verseilt, vollständig dispergiert oder eine Kombination aus verseilt und vollständig dispergiert sind.

9. Armierungsgewebe nach Anspruch 1, des Weiteren enthaltend eine Schlichte, die Reagenzien enthält, die ausgewählt sind aus einer Gruppe bestehend aus Wasser, Essigsäure, einem Schmiermittel, einem Filmbildner, einem Silankopplungsmittel, einem Biozid und Gemischen davon.

10. Armierungsgewebe nach Anspruch 1, wobei der Oberflächenklebstoff ausgewählt ist aus einer Gruppe bestehend aus PE, mikrokristallinem Wachs, EVA, modifiziertem EVA, Ethylen-Acrylester-Copolymer, Ethylen-Acrylester-Maleinsäureanhydrid-Terpolymeren, Copolyestern, Copolyamiden, amorphem Polypropylen, synthetischen Gummis, Acryl-Blockcopolymeren und Kombinationen davon.

11. Armierungsgewebe nach Anspruch 1, wobei der Oberflächenklebstoff eine Klebrigkeit von 0,5 bis 1 N/m aufweist.

12. Armierungsgewebe nach Anspruch 1, wobei der Oberflächenklebstoff ein Flächengewicht von 0,5 bis 3 kg/sm aufweist und 30 bis 80 Gewichtsprozent erste Lage, 20 bis 70 Gewichtsprozent zweite Lage und 0,1 bis 2 Gewichtsprozent Oberflächenklebstoff umfasst.

13. Armierungsgewebe nach Anspruch 1, wobei der Oberflächenklebstoff eine Dichte von 2 bis 30 gsm aufweist.

14. Armierungsgewebe nach Anspruch 1, wobei die erste Lage ein Gewicht von 0,3 bis 1,5 kg/sm aufweist.

15. Armierungsgewebe nach Anspruch 1, wobei die erste Lage eine Porosität von 1000 bis 9000 l/sm/s aufweist.

16. Verfahren zur Herstellung eines Armierungsgewebe, umfassend:
Bilden einer gebündelten Schicht aus Endlosfasern;
Bereitstellen eines Oberflächenklebstoffes, der ausgewählt ist aus einer Gruppe bestehend aus einem Heißschmelzklebstoff und einem bahngebundenen Klebstoff, mit einem Schmelzflussindexbereich von 5 bis 500 bei Schmelztemperatur und von 900 bis 2500 bei Auftragstemperatur; und
Verdichten der gebündelten Schicht mit einer Lage von Material, das ausgewählt ist aus einer Gruppe bestehend aus Oberflächenmatte, Endlosmatte, Glasfasermatte, direkter Schnittmatte, direkter Endlosmatte, gebündelten Endlosfasern, Gewebe, vlies, Gelege und Kombinationen davon.

17. Verfahren nach Anspruch 16, wobei der Bildungsschritt Folgendes enthält: Zuführen einer Vielzahl von Endlosfasern von einem Gatter, des Oberflächenklebstoffs als Bahn, wobei der Oberflächenklebstoff in der Linie zu einer Bahn gebildet wird, Extrudieren des Oberflächenklebstoffs als Heißschmelze, vorzugsweise durch Auftragen des Heißschmelzklebstoffs in einem Muster, das ausgewählt ist aus einer Gruppe bestehend aus einem sinusförmigen Muster, einem schlingenförmigen Muster, einem geradlinigen Muster und Kombinationen davon, Auftragen des Oberflächenklebstoffs bei einer Flächendichte von 2 bis 30 gsm, Vollenden des Verdichtens bei einer Rate von 50 bis 500 Meter/Minute und/oder Verwenden eine Oberflächenklebstoffs mit einer Klebrigkeit von 0,5 bis 1,0 N/m.

18. Armierungsgewebe, umfassend:
eine Oberflächematte;
eine Endlosmatte;
mindestens eine Schicht gebündelter Endlosfasern;
eine Lage aus Gewebe oder vlies; und
einen oberflächenklebstoff, ausgewählt aus einer Gruppe bestehend aus einem Heißschmelzklebstoff und einem bahngebundenen Klebstoff mit einem Schmelzflussindexbereich von 5 bis 500 bei Schmelztemperatur und von 900 bis 2500 bei Auftragstemperatur.

19. Armierungsgewebe, umfassend:
eine Oberflächematte;
eine Lage aus Schnittfasern;
eine Schicht aus gebündelten Endlosfasern;
eine Infusionsmediumlage, die ausgewählt ist aus einer Gruppe bestehend aus Oberflächenmatte, Endlosmatte, Glasfasermatte, direkter Schnittmatte, direkter Endlosmatte, gebündelten Endlosfasern, Gewebe, Vlies, Gelege und Kombinationen davon,
eine Lage aus Gewebe, vlies oder Schnittfasern; und
einen Oberflächenklebstoff, wobei der Oberflächenklebstoff ausgewählt ist aus einer Gruppe bestehend aus einem Heißschmelzklebstoff und einem bahngebundenen Klebstoff mit einem Schmelzflussindexbereich von 5 bis 500 bei Schmelztemperatur und von 900 bis 1300 bei Auftragstemperatur.

20. Armierungsgewebe, umfassend:
eine Oberflächematte;
eine Infusionsmediumlage, die ausgewählt ist aus einer Gruppe bestehend aus Oberflächenmatte, Endlosmatte, Glasfasermatte, direkter Schnittmatte, direkter Endlosmatte, gebündelten Endlosfasern, Gewebe, Vlies, Gelege und Kombinationen davon,
eine Schicht aus gebündelten Endlosfasern;
eine erste Verstärkungslage aus unidirektionalem Stoff, der sich in eine Richtung +45 Grad relativ zu den gebündelten Endlosfasern erstreckt;
eine zweite Verstärkungslage aus unidirektionalem Stoff, der sich in eine Richtung -45 Grad relativ zu den gebündelten Endlosfasern erstreckt; und
einen Oberflächenklebstoff, wobei der Oberflächenklebstoff ausgewählt ist aus einer Gruppe bestehend aus einem Heißschmelzklebstoff und einem bahngebundenen Klebstoff mit einem Schmelzflussindexbereich von 5 bis 500 bei Schmelztemperatur und von 900 bis 2500 bei Auftragstemperatur.

21. Armierungsgewebe nach Anspruch 20, des Weiteren enthaltend eine zweite Schicht aus gebündelten Endlosfasern und einen Oberflächenklebstoff, der unter der zweiten Verstärkungslage liegt.

22. Armierungsgewebe, umfassend:
eine Oberflächematte;
eine Endlosmatte;
mindestens eine Schicht von gebündelten Endlosfasern;
eine erste Verstärkungslage aus unidirektionalem Stoff, der sich in eine Richtung +45 Grad relativ zu den gebündelten Endlosfasern erstreckt;
eine zweite Verstärkungslage aus unidirektionalem Stoff, der sich in eine Richtung -45 Grad relativ zu den gebündelten Endlosfasern erstreckt; und
einen Oberflächenklebstoff, wobei der Oberflächenklebstoff ausgewählt ist aus einer Gruppe bestehend aus einem Heißschmelzklebstoff und einem bahngebundenen Klebstoff mit einem Schmelzflussindexbereich von 5 bis 500 bei Schmelztemperatur und von 900 bis 2500 bei Auftragstemperatur.

23. Armierungsgewebe nach Anspruch 22, des Weiteren umfassend eine Lage aus Schnittfasern.

24. Armierungsgewebe nach Anspruch 22, des Weiteren enthaltend mindestens eine zusätzliche Verstärkungslage, die unter der zweiten Verstärkungslage liegt.

## Revendications

1. Textile de renforcement, comprenant :
une première couche de fibres continues collimatées ;
une seconde couche sélectionnée parmi un groupe constitué de voile, de mat à filament continu, de mat à fils coupés, de mat coupé direct, de mat continu direct, de fibres continues collimatées, de textile tissé, de textile non tissé, de canevas et d'associations de ceux-ci ; et
un adhésif de surface, ledit adhésif de surface faisant coller lesdites première et seconde couches l'une à l'autre, ledit adhésif de surface étant sélectionné parmi un groupe constitué d'un adhésif thermofusible et d'un adhésif collé en bande, ledit adhésif de surface possédant une plage d'indice de fluage allant de 5 à 500 à température de fusion et de 900 à 2 500 à température d'application.

2. Textile de renforcement selon la revendication 1, dans lequel le textile de renforcement est dépourvu de couture.

3. Textile de renforcement selon la revendication 1, dans lequel lesdites fibres continues collimatées sont sélectionnées parmi un groupe de matériaux constitué de fibres de verre, de fibres de carbone, de fibres de graphite, de fibres de carbone vitreux, de fibres de carbone non-graphite, de fibres de graphite monolithique au bore, de fibres de carbone non-graphite monolithique au bore, de silicone, d'aramide, de fibres de céramique, de fibres de polymère thermodurci, de fibres de polymère thermoplastique, de fibres naturelles et de mélanges de celles-ci.

4. Textile de renforcement selon la revendication 1, dans lequel ladite seconde couche est construite à partir d'un matériau sélectionné parmi un groupe de matériaux constitué de fibres de verre, de fibres de carbone, de fibres de graphite, de fibres de carbone vitreux, de fibres de carbone non-graphite, de fibres de graphite monolithique au bore, de fibres de carbone non-graphite monolithique au bore, de silicone, d'aramide, de fibres de céramique, de fibres de polymère thermodurci, de fibres de polymère thermoplastique, de fibres naturelles et de mélanges de celles-ci.

5. Textile de renforcement selon la revendication 1, dans lequel lesdites fibres continues collimatées possèdent une taille de mèche comprise entre 100 et 10 000 tex et un diamètre de filament comprise entre 9 et 30 microns, de préférence une taille de mèche comprise entre 600 et 8 000 tex et un diamètre de filament comprise entre 12 et 26 microns.

6. Textile de renforcement selon la revendication 1, dans lequel lesdites fibres coupées possèdent une taille de mèche comprise entre 1 000 et 8 000 tex et un diamètre de filament comprise entre 6 et 30 microns.

7. Textile de renforcement selon la revendication 6, dans lequel lesdites fibres coupées possèdent un tex comprise entre 10 et 1 000 en mèches séparées.

8. Textile de renforcement selon la revendication 1, dans lequel des filaments dans ledit voile sont toronnés, entièrement dispersés ou une association de filaments toronnés et entièrement dispersés.

9. Textile de renforcement selon la revendication 1, comprenant en outre une taille comprenant des réactifs sélectionnés parmi un groupe constitué d'eau, d'acide acétique, d'un lubrifiant, d'un filmogène, d'un agent adhésif au silane, d'un biocide et de mélanges de ceux-ci.

10. Textile de renforcement selon la revendication 1, dans lequel ledit adhésif de surface est sélectionné parmi un groupe constitué de PE, de cire microcristalline, d'EVA, d'EVA modifié, de copolymère éthylène - ester acrylique, de terpolymères éthylène - ester acrylique - anhydride maléique, de copolyesters, de copolyamides, de polypropylène amorphe, de caoutchoucs synthétiques, de copolymères blocs acryliques, et d'associations de ceux-ci.

11. Textile de renforcement selon la revendication 1, dans lequel ledit adhésif de surface possède une pégosité entre 0,5 et 1 N/m.

12. Textile de renforcement selon la revendication 1, dans lequel le textile de renforcement possède un poids par surface unitaire comprise entre 0,5 et 3 kg/sm et comprend entre 30 et 80 pour cent en poids de première couche, entre 20 et 70 pour cent en poids de seconde couche et entre 0,1 et 2 pour cent en poids d'adhésif de surface.

13. Textile de renforcement selon la revendication 1, dans lequel ledit adhésif de surface est à une densité comprise entre 2 et 30 gsm.

14. Textile de renforcement selon la revendication 1, dans lequel ladite première couche possède un poids d'entre 0,3 et 1,5 kg/sm.

15. Textile de renforcement selon la revendication 1, dans lequel ladite première couche possède une porosité comprise entre 1 000 et 9 000 l/sm/s.

16. Procédé de fabrication d'un tissu de renforcement, comprenant les étapes consistant à :
former une feuille collimatée à partir de fibres continues ;
fournir un adhésif de surface sélectionné parmi un groupe constitué d'un adhésif thermofusible et d'un adhésif collé en bande possédant une plage d'indice de fluage de 5 à 500 à température ambiante et de 900 à 2 500 à température d'application ; et
consolider ladite feuille collimatée avec une couche de matériau sélectionné parmi un groupe constitué de voile, de mat à filament continu, de mat à fils coupés, de mat coupé direct, de mat continu direct, de fibres continues collimatées, de textile tissé, de textile non tissé, de canevas et d'associations de ceux-ci.

17. Procédé selon la revendication 16, dans lequel ladite étape de formage comprend les étapes consistant à distribuer une pluralité de fibres continues à partir d'un cantre, ledit adhésif de surface sous forme de bande, transformer ledit adhésif de surface en une bande en ligne, extruder ledit adhésif de surface étant sous forme de mélange thermofusible, de préférence en appliquant ledit adhésif thermofusible dans une configuration sélectionnée parmi un groupe constitué d'une configuration sinusoïdale, d'une configuration en boucle, d'une configuration en ligne droite et d'associations de celles-ci, appliquer ledit adhésif de surface à une densité surfacique comprise entre 2 et 30 gsm, compléter ladite consolidation à une vitesse d'entre 50 et 500 mètres/minute, et/ou y compris utiliser un adhésif de surface possédant une pégosité comprise entre 0,5 et 1,0 N/m.

18. Textile de renforcement, comprenant :
un voile de surface ;
un mat à filament continu ;
au moins une feuille de fibres continues collimatées ;
une couche de textile tissé ou non tissé ; et
un adhésif de surface, ledit adhésif de surface étant sélectionné parmi un groupe constitué d'un adhésif thermofusible et d'un adhésif collé en bande possédant une plage d'indice de fluage allant de 5 à 500 à température ambiante et de 900 à 2 500 à température d'application.

19. Textile de renforcement, comprenant :
un voile de surface ;
une couche de fibres coupées ;
une feuille de fibres continues collimatées ;
une couche de support d'infusion sélectionnée parmi un groupe de matériaux constitué de voile, de mat à filament continu, de mat à fils coupés, de mat coupé direct, de mat continu direct, de fibres continues collimatées, de textile tissé, de textile non tissé, de canevas et d'associations de ceux-ci ;
une couche de textile tissé, de textile non tissé ou de fibres coupées ;
et
un adhésif de surface, ledit adhésif de surface étant sélectionnée parmi un groupe constitué d'un adhésif thermofusible et d'un adhésif collé en bande possédant une plage d'indice de fluage de 5 à 500 à température ambiante et de 900 à 1 300 à température d'application.

20. Textile de renforcement, comprenant :
un voile de surface ;
une couche de support d'infusion sélectionnée parmi un groupe de matériaux constitué de voile, de mat à filament continu, de mat à fils coupés, de mat coupé direct, de mat continu direct, de fibres continues collimatées, de textile tissé, de textile non tissé, de canevas et d'associations de ceux-ci ;
une feuille de fibres continues collimatées ;
une première couche de renforcement de textile unidirectionnel s'étendant dans une direction de +45 degrés par rapport auxdites fibres continues collimatées ;
une seconde couche de renforcement de textile unidirectionnel s'étendant dans une direction de -45 degrés par rapport auxdites fibres continues collimatées ; et
un adhésif de surface, ledit adhésif de surface étant sélectionnée parmi un groupe constitué d'un adhésif thermofusible et d'un adhésif collé en bande possédant une plage d'indice de fluage allant de 5 à 500 à température ambiante et de 900 à 2 500 à température d'application.

21. Textile de renforcement selon la revendication 20, comprenant en outre une seconde feuille de fibres continues collimatées et un adhésif de surface se trouvant en dessous de ladite seconde couche de renforcement.

22. Textile de renforcement, comprenant :
un voile de surface ;
un mat à filament continu ;
au moins une feuille de fibres continues collimatées ;
une première couche de renforcement de textile unidirectionnel s'étendant dans une direction de +45 degrés par rapport auxdites fibres continues collimatées ;
une seconde couche de renforcement de textile unidirectionnel s'étendant dans une direction de -45 degrés par rapport auxdites fibres continues collimatées ; et
un adhésif de surface, ledit adhésif de surface étant sélectionnée parmi un groupe constitué d'un adhésif thermofusible et d'un adhésif collé en bande possédant une plage d'indice de fluage allant de 5 à 500 à température ambiante et de 900 à 2 500 à température d'application.

23. Textile de renforcement selon la revendication 22, comprenant en outre une couche de fibres coupées.

24. Textile de renforcement selon la revendication 22, comprenant en outre au moins une couche de renforcement supplémentaire se trouvant en dessous de ladite seconde couche de renforcement.
